# EUROPEAN PATENT SPECIFICATION

(11) **EP 4 559 784 B1**
(45) Date of publication and mention of the grant of the patent: **28.10.2026**
(21) Application number: 24814097.2
(22) Date of filing: 30.04.2024
(51) Int. Cl.: B62D 5/06, B62D 6/00, B62D 5/065, F15B 21/08

(54) **VEHICLE FUZZY FEEDFORWARD PATH TRACKING CONTROL METHOD BASED ON HYDRAULIC STEERING LEAKAGE COMPENSATION**
FUZZY-VORWÄRTSKOPPLUNGS-WEGVERFOLGUNGSSTEUERVERFAHREN FÜR EIN FAHRZEUG AUF DER BASIS VON HYDRAULISCHER LENKLECKKOMPENSATION
PROCÉDÉ DE COMMANDE FLOUE DE SUIVI DE TRAJET ANTICIPÉ DE VÉHICULE BASÉ SUR UNE COMPENSATION DE FUITE DE DIRECTION HYDRAULIQUE

(30) Priority: 31.05.2023 CN 202310640559
(43) Date of publication of application: 28.05.2025
(73) Proprietor: Anhui Heli Co., Ltd., Hefei, Anhui 230601 (CN)
(72) Inventor: ZHANG, Donglin, Hefei, Anhui 230601 (CN); CHENG, Qing, Hefei, Anhui 230601 (CN); BI, Sheng, Hefei, Anhui 230601 (CN); BAI, Yingchun, Hefei, Anhui 230601 (CN); CHEN, Yang, Hefei, Anhui 230601 (CN); XIA, Guang, Hefei, Anhui 230601 (CN)
(74) Representative: VKK Patentanwälte PartG mbB
(86) International application number: PCT/CN2024/091018
(87) International publication number: WO 2024/244892

(56) References cited:
- CN-A- 102 806 941
- CN-A- 102 806 941
- CN-A- 112 373 560
- CN-A- 115 230 805
- CN-A- 115 636 011
- CN-A- 116 834 829
- US-B1- 6 442 463

## Description

### Technical Field

The present invention belongs to the field of path tracking control for vehicles with hydraulic steering, specifically relating to a vehicle fuzzy feedforward path tracking control method based on hydraulic steering leakage compensation.

### Background

With the advancement of technology, the application fields of fully hydraulic synchronous steering in engineering machinery, agricultural machinery, and military vehicles have become increasingly widespread, and the application environments have also become more diverse. The current trend towards comprehensive intelligence has laid the foundation for the intelligent development of various vehicles using fully hydraulic steering. Therefore, the requirements for fully hydraulic synchronous steering vehicles have shifted from functional requirements to efficiency, safety, and precision, with increasing demands on steering control capabilities.

Traditional fully hydraulic steering vehicles may experience "loss of precision" in the hydraulic steering pump due to manufacturing or installation errors and wear during use, meaning the hydraulic steering pump cannot discharge oil at the predetermined displacement. This results in inconsistency between the steered wheel angle and the steering wheel angle. For example, in a conventional hydraulic steering system, when the steered wheel angle has reached its maximum, the steering wheel can still slide a certain distance in the direction of the turn due to leakage, and when returning to straight-line driving, the steering wheel angle deviates from the previous straight-line position, failing to achieve synchronization between the steering wheel and the vehicle wheels. Such leakage disturbances in the steering actuator can cause system tracking errors, affecting the path tracking accuracy and robustness of intelligent vehicles.

The extensive application of fully hydraulic steering systems in vehicles makes the steering system accuracy during path tracking undoubtedly one of the most concerning issues in the intelligent vehicle research of construction vehicles, military vehicles, agricultural vehicles and other vehicles equipped with fully hydraulic steering systems. The decisive factors affecting path tracking accuracy are the precision and reliability of the steering system. Therefore, improving the path tracking accuracy of such intelligent vehicles should primarily focus on research into the precision and reliability of their steering systems.

Document CN-112373560-A shows a vehicle fuzzy feed-forward path tracking control method, which acquires a steering wheel angle , and a piston rod displacement parameter, determines a transmission ratio of a hydraulic steering system of the vehicle , wherein a path tracking algorithm outputs a desired wheel angle in different cycles, obtaining a desired steering wheel angle and inputting the desired steering wheel angle into the hydraulic steering system of the vehicle to perform path tracking steering operations.

### Summary

To address the shortcomings of the existing technology, the present invention proposes a vehicle fuzzy feedforward path tracking control method based on hydraulic steering leakage compensation, aiming to solve the problem of poor tracking accuracy in intelligent vehicles using hydraulic steering due to steering system leakage during path tracking.

The technical solution according to the present invention to solve the technical problem is as follows:
A vehicle fuzzy feedforward path tracking control method based on hydraulic steering leakage compensation, comprising the following steps:
Step 1: Acquiring a steering wheel angle, a wheel angle, and a piston rod displacement parameter;
Step 2: Determining a transmission ratio *Kᵥ* of a hydraulic steering system of the vehicle, wherein a path tracking algorithm outputs a desired wheel angle *β* in different cycles, obtaining a desired steering wheel angle *θ* = *βKᵥ,* and inputting the desired steering wheel angle into the hydraulic steering system of the vehicle to perform path tracking steering operations;
Step 3: Determining a steering load force *F* and an actual steering angle error *e*(*θ*), and obtaining a feedforward leakage compensation parameter *K_{C}* through fuzzy control;
Step 4: Using the load force and the actual steering angle error as inputs to fuzzy rules, controlling the feedforward leakage compensation parameter as an output of the fuzzy rules, and constructing a fuzzy control system;
Step 5: Defuzzifying the fuzzy control system using the centroid method to obtain a fuzzy sliding mode controller, and using the fuzzy sliding mode controller to perform a comparative analysis of an actually detected rear wheel angle, controlling the compensation solenoid valve to perform fluid replenishment, ensuring that the actual steering angle error of the steering system during the path tracking cycle remains within a reasonable range;
Step 6: Performing fluid replenishment by the compensation solenoid valve for each path tracking cycle, and executing a path tracking steering operation by the vehicle hydraulic steering system;
Step 7: Repeating the above steps 1-6 to perform calculations for a next cycle of the path tracking algorithm, completing an entire path tracking process.

Further, in Step 1, the steering wheel angle parameter is detected by a steering wheel angle sensor installed on a steering column of the forklift; the wheel angle parameter is detected by a wheel angle sensor installed at the rear steered wheel of the forklift; and the piston rod displacement parameter is detected by a displacement sensor installed on the steering piston rod.

Further, in Step 2, the transmission ratio *Kᵥ* of the hydraulic steering system is determined by specific characteristics of the steering system of the vehicle. For example, the transmission ratio of the steering system of a 3-ton intelligent forklift is *Kᵥ* =11.

Further, the actual steering angle error *e*(*θ*) in Step 3 is a steering deviation value, which is the difference between a corresponding steering wheel angle and an actual steering wheel angle. The actual steering wheel angle is a steering wheel angle collected by the steering wheel angle sensor, and the corresponding steering wheel angle is obtained by converting the actual wheel angle collected by the wheel angle sensor using the transmission ratio of the hydraulic steering system.

Further, in Step 4, the formulation of the fuzzy rules comprises:
The feedforward leakage compensation parameter generally follows the same trend as the load force. The larger the load force, the larger the feedforward leakage compensation parameter becomes simultaneously.

When the actual steering angle error is positive, the feedforward leakage compensation parameter should increase as the absolute value of the actual steering angle error increases; when the actual steering angle error is negative, the feedforward leakage compensation parameter should decrease as the absolute value of the actual steering angle error increases.

The range of load force and actual steering angle error covers more than 95% of the possibilities. If values exceed the range (comprising maximum or minimum values), the maximum region of the corresponding linguistic variable is taken.

The steps for constructing the fuzzy control system comprise:
Step 41: Formulating the fuzzy rules and determining the relationship between the load force, the actual steering angle error, and the feedforward leakage compensation parameter;
Step 42: Determining an expression form of the fuzzy rules, dividing input and output fuzzy subsets into regions, and establishing a membership function for input and output systems to obtain the fuzzy control system.

Further, in Step 42, the dividing input and output fuzzy subsets into regions comprises a negative large region, a negative medium region, a negative small region, a zero region, a positive small region, a positive medium region, and a positive large region.

Further, in Step 3, the load force *F* is measured by an observer.

Further, the load force *F* is measured by an observer, which is achieved by tracking and measuring the piston rod displacement, and then real-time predicting the load force by combining a flow equation and a dynamic equation of a steering cylinder in the hydraulic steering system, wherein the flow equation of the steering cylinder of the hydraulic steering gear is: ${Q}_{a} = {A}_{p} \frac{dy}{dt} + \frac{{V}_{t}}{E} \frac{{dP}_{7}}{dt} + {C}_{t} \frac{{dP}_{7}}{dt}$ (1)

The dynamic equation of the steering cylinder of the hydraulic steering gear is: ${p}_{7} {A}_{p} = {m}_{p} \frac{{d}^{2} y}{d {t}^{2}} + {R}_{p} \frac{d y}{d t} + F$ (2)

Where: *P*₇ is a load pressure of the steering cylinder, *Aₚ* is a working cross-sectional area of the steering cylinder, *Vₜ* is a cylinder volume, *mₚ* is an equivalent mass of the piston and piston rod, *E* is a bulk modulus of the hydraulic fluid, *Rₚ* is a viscous damping coefficient of the piston, *F* is the load force, *y* is an actual piston rod displacement; Cₜ is a hydraulic fluid leakage coefficient, and dt is an integral over time.

Based on the analysis of equations (1) and (2), a load force observation state variable is selected as: $x = {\left[y \dot{y} {p}_{7} F\right]}^{T}$ (3)

A state equation of a hydraulic steering system model is: $\hat{x} = Ax + Bu$ (4)

Where: $A = \left[\begin{matrix}0 & 1 & 0 \\ 0 & {c}_{1} & {c}_{2} \\ 0 & {c}_{3} & {c}_{4}\end{matrix}\right] , B = \left[\begin{matrix}0 \\ 0 \\ {c}_{5}\end{matrix}\right]$ ${c}_{1} = - \frac{{R}_{p}}{{m}_{p}} , {c}_{2} = \frac{{A}_{p}}{{m}_{p}} , {c}_{3} = - \frac{E {A}_{p}}{{V}_{t}} , {c}_{4} = - \frac{E}{{V}_{t}} \left({k}_{c 1}+2{C}_{t}\right) , {c}_{5} = \frac{E}{{V}_{t}} {k}_{q 1}$

*k*_{ql} is a flow gain, *k*_{c1} is a system flow-pressure coefficient, Cₜ is the hydraulic fluid leakage coefficient, and *u* is a steering wheel angle input to the system.

An observer state equation used is as follows: $\dot{\hat{x}} = A \hat{x} + Bu + He$ (5)

Where: *e* is an error between the system's true state variable and the observer's estimated state, *H* is an coefficient of the observer, also known as an observation matrix, *H =* [*H*₁ *H*₂ *H*₃ *H*₄]*^{T}.*

Assuming desired pole positions of a load force observation system are *p*₁*,p*₂*,p*₃*,p*_{4*,*} values of parameters *H*₁*,H*₂*,H*₃*,H*₄ should satisfy: $\left|sI-A\right| = {\sum }_{i = 1}^{n + 1} \left(s-{p}_{i}\right)$ (6) $\left(s-{p}_{1}\right) \left(s-{p}_{2}\right) \left(s-{p}_{3}\right) \left(s-{p}_{4}\right) = 0$ (7)

By equating the coefficients of each term of the polynomial for *s*, values of the parameters are determined: $\begin{matrix}{H}_{1} = {c}_{1} - {p}_{1} - {p}_{2} - {p}_{3} - {p}_{4} + {c}_{4} \\ {H}_{2} = {H}_{1} ⋅ {c}_{1} + {H}_{1} ⋅ {c}_{4} + {p}_{1} ⋅ {p}_{2} + {c}_{2} ⋅ {c}_{3} + {p}_{4} ⋅ \left({p}_{1}+{p}_{2}+{p}_{3}\right) + {p}_{3} ⋅ \left({p}_{1}+{p}_{2}\right) \\ {H}_{3} = \left\{{H}_{2}⋅{c}_{4}-{H}_{4}⋅{c}_{3}-{p}_{4}⋅\left[{p}_{1}⋅{p}_{2}+{p}_{3}⋅\left({p}_{1}+{p}_{2}\right)\right]+{H}_{1}⋅{c}_{2}⋅{c}_{3}-{p}_{1}⋅{p}_{2}⋅{p}_{3}\right\} / {c}_{2} \\ {H}_{4} = - {p}_{1} ⋅ {p}_{2} ⋅ {p}_{3} ⋅ {p}_{4} / \left({c}_{3}⋅{c}_{4}\right)\end{matrix}$ (8)

The present invention collects the wheel angle through the wheel angle sensor, converts it using the transmission ratio of the hydraulic steering system to obtain the corresponding steering wheel angle parameter, and then calculates the difference with the actually collected steering wheel angle to obtain the actual steering angle error. Finally, the actual steering angle error is written into the fuzzy sliding mode controller along with a load force observation value. The feedforward leakage compensation parameter is obtained through the calculation of the fuzzy sliding mode controller. If the feedforward leakage compensation parameter is zero, the compensation solenoid valve is closed; if the feedforward leakage compensation parameter is not zero, the compensation solenoid valve is opened, and the duty cycle of the compensation solenoid valve is adjusted to achieve feedforward compensation for the leakage fluid during path tracking, improving path tracking accuracy. The steering cylinder outputs the corresponding hydraulic fluid for the steering mechanism to operate.

Compared with the prior art, the beneficial effects of the present invention are:
1. The present invention uses a feedforward approach combined with a fuzzy sliding mode controller to compensate for hydraulic steering system leakage in advance. The compensation adjustment can be performed before the leakage disturbance occurs, which does not affect the path tracking process of the next cycle and improves the path tracking accuracy of the intelligent vehicle.
2. The fuzzy control according to the present invention, using the steering load force and the actual steering angle error as inputs, accurately determines the feedforward compensation parameter, thereby controlling the duty cycle of the compensation solenoid valve to precisely and timely compensate for the leakage fluid.
3. The present invention proposes that the load force is measured by the observer. The observer can convert the time-varying load force, which is difficult to observe directly during the steering process, through the state equation, and observe the piston displacement to predict the load force in real time.

### Brief Description of the Drawings

Fig. 1 is a path tracking process based on hydraulic steering leakage compensation of the present invention;
Fig. 2 is a schematic diagram of the oil compensation principle of the present invention;
Fig. 3 is a schematic diagram of the input and output of the fuzzy controller of the present invention;
Fig. 4 is the membership function diagram of the input and output systems of the present invention;
Fig. 5(a) is a comparative diagram of path tracking of the present invention; and
Fig. 5(b) is a comparative diagram of path tracking error of the present invention.

### Detailed Description

The technical solutions in the embodiments of the present invention will be clearly and completely described below with reference to the accompanying drawings. It is evident that the described embodiments are merely some, but not all, of the embodiments of the present invention. Based on the embodiments of the present invention, all other embodiments obtained by those skilled in the art without inventive labor belong to the protection scope of the present invention.

### Embodiment 1:

In this embodiment, a vehicle fuzzy feedforward path tracking control method based on hydraulic steering leakage compensation is applied to an intelligent vehicle equipped with an actuator. The actuator comprises a hydraulic active steering actuator, which comprises a compensation solenoid valve. The solenoid valve is connected to an inlet of a hydraulic cylinder, and both ends of the hydraulic cylinder are connected to a vehicle body and a steering axle, respectively. The control method is performed as follows:
Step 1: Installing a steering wheel angle sensor on a steering column of a forklift to obtain a steering wheel angle parameter;
Installing a wheel angle sensor at a (rear) steered wheel of the forklift to obtain a wheel angle parameter;
Installing a displacement sensor on a steering piston rod to obtain a piston rod displacement parameter *y*;
Step 2: Determining a transmission ratio *Kᵥ* of a hydraulic steering system , where the transmission ratio *Kᵥ* of the hydraulic steering system is determined by specific characteristics of the vehicle's steering system. The transmission ratio of the steering system varies for different vehicle models. The path tracking algorithm outputs a desired wheel angle *β* in different cycles, and the desired wheel angle is converted to a desired steering wheel angle *θ* = *βKᵥ* accoring to the transmission ratio *Kᵥ* of the hydraulic
steering system, which is then input into the hydraulic steering system of the forklift to perform path tracking steering operations;
Step 3: Determining a steering load force *F* and an actual steering angle error *e*(*θ*), and establishing a fuzzy relationship between the load force *F* and the actual steering angle error *e*(*θ*) with a feedforward leakage compensation parameter *K_{C}* through fuzzy control;
Step 31: Determining the actual steering angle error value as follows: An actual wheel angle *βₐ* is collected by the wheel angle sensor and converted by the system transmission ratio to obtain a corresponding steering wheel angle *θₐ*. An actual steering wheel angle *θ_{b}* is collected by the steering wheel angle sensor. The difference between the corresponding steering wheel angle and the actual steering wheel angle is the steering deviation value, i.e., *e*(*θ*)*=θ_{b}-θₐ.*

Step 32: Determining the steering load force *F* by an observer, and the observation steps of the observer are as follows:
The observer tracks and measures the easily measurable piston rod displacement, and then combines the flow equation and the dynamic equation of the steering system cylinder to real-time predict the inconveniently observed load force, wherein:
The flow equation of the steering cylinder of the hydraulic steering gear is: ${Q}_{a} = {A}_{p} \frac{dy}{dt} + \frac{{V}_{t}}{E} \frac{{dP}_{7}}{dt} + {C}_{t} \frac{{dP}_{7}}{dt}$ (1)

The dynamic equation of the steering cylinder is: ${p}_{7} {A}_{p} = {m}_{p} \frac{{d}^{2} y}{d {t}^{2}} + {R}_{p} \frac{d y}{d t} + F$ (2)

Where: *P*₇ is a load pressure of the steering cylinder, *k*_{ql} is a flow gain, *d* is a steering valve spool diameter, *Aₚ* is a working cross-sectional area of the steering cylinder, *Dₘ* is a theoretical displacement of the hydraulic motor, *Vₜ* is a cylinder volume, *mₚ* is an equivalent mass of the piston and piston rod, *E* is a bulk modulus of the hydraulic fluid, *Rₚ* is a viscous damping coefficient of the piston, *F* is the load force, and *y* is the actual piston rod displacement.

Based on the analysis of equations (1) and (2), a load force observation state variable is selected as: $x = {\left[y \dot{y} {p}_{7} F\right]}^{T}$ (3)

A state equation of a hydraulic steering system model is: $\hat{x} = Ax + Bu$ (4)

Where: $A = \left[\begin{matrix}0 & 1 & 0 \\ 0 & {c}_{1} & {c}_{2} \\ 0 & {c}_{3} & {c}_{4}\end{matrix}\right] , B = \left[\begin{matrix}0 \\ 0 \\ {c}_{5}\end{matrix}\right] ,$ ${c}_{1} = - \frac{{R}_{p}}{{m}_{p}} , {c}_{2} = \frac{{A}_{p}}{{m}_{p}} , {c}_{3} = - \frac{E {A}_{p}}{{V}_{t}} , {c}_{4} = - \frac{E}{{V}_{t}} \left({k}_{c 1}+2{C}_{t}\right) , {c}_{5} = \frac{E}{{V}_{t}} {k}_{q 1}$

An observer state equation used is as follows: $\dot{\hat{x}} = A \hat{x} + Bu + He$ (5)

Where: *e* is an error between the system's true state variable and the observer's estimated state, *u* is a system input (steering wheel angle), *H* is an coefficient of the observer, also known as an observation matrix *H =* [*H*₁ *H₂ H₃ H₄*]*^{T}.*

The determination of the observation matrix determines whether the state estimation error of the system under Luenberger observation can decay to zero, making the system tend to a stable state. Matrices A and B are determined by the system characteristics, so the necessary condition for the system to be asymptotically stable is that the characteristic roots (system poles) of the observation matrix *H* all lie in the left half of the complex plane. Therefore, the parameter *H =* [*H*₁ *H*₂ *H*₃ *H*₄]*^{T}* must ensure that the characteristic roots of the observation matrix *H* all lie in the left half of the complex plane and that their real parts are sufficiently negative.

Assuming desired pole positions of a load force observation system are *p*₁,*p*₂,*p*₃*,p*₄*,* values of parameters *H*₁*,H*₂*,H*₃*,H*₄ should satisfy: $\left|sI-A\right| = {\sum }_{i = 1}^{n + 1} \left(s-{p}_{i}\right)$ (6) $\left(s-{p}_{1}\right) \left(s-{p}_{2}\right) \left(s-{p}_{3}\right) \left(s-{p}_{4}\right) = 0$ (7)

By equating the coefficients of each term of the polynomial for *s,* values of the parameters are determined: $\begin{matrix}{H}_{1} = {c}_{1} - {p}_{1} - {p}_{2} - {p}_{3} - {p}_{4} + {c}_{4} \\ {H}_{2} = {H}_{1} ⋅ {c}_{1} + {H}_{1} ⋅ {c}_{4} + {p}_{1} ⋅ {p}_{2} + {c}_{2} ⋅ {c}_{3} + \\ {p}_{4} ⋅ \left({p}_{1}+{p}_{2}+{p}_{3}\right) + {p}_{3} ⋅ \left({p}_{1}+{p}_{2}\right) \\ {H}_{3} = \left\{\begin{matrix}{H}_{2} ⋅ {c}_{4} - {H}_{4} ⋅ {c}_{3} - {p}_{4} ⋅ \left[{p}_{1}⋅{p}_{2}+{p}_{3}⋅\left({p}_{1}+{p}_{2}\right)\right] + \\ {H}_{1} ⋅ {c}_{2} ⋅ {c}_{3} - {p}_{1} ⋅ {p}_{2} ⋅ {p}_{3}\end{matrix}\right\} / {c}_{2} \\ {H}_{4} = - {p}_{1} ⋅ {p}_{2} ⋅ {p}_{3} ⋅ {p}_{4} / \left({c}_{3}⋅{c}_{4}\right)\end{matrix}$ (8).

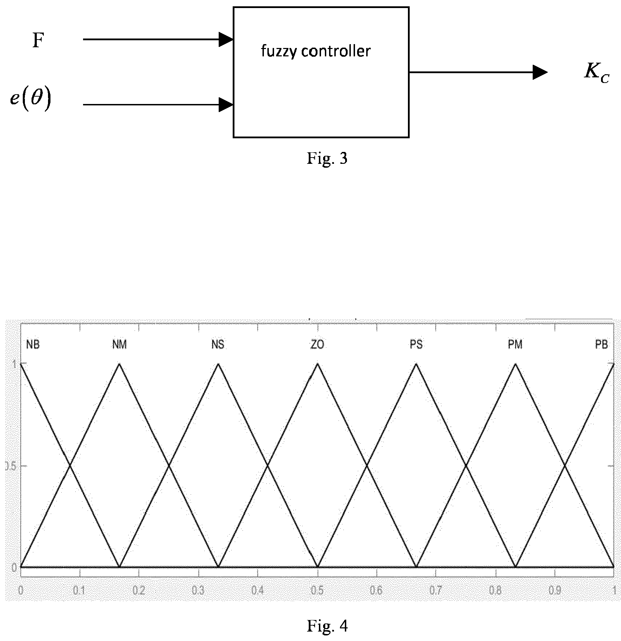

Step 4: Using the load force *F* and the actual steering angle error *e*(*θ*) as inputs to fuzzy rules, controlling the feedforward leakage compensation parameter K_{C} as an output of the fuzzy rules, and constructing a fuzzy control system. The input and output of the fuzzy logic controller are shown in Fig. 3. The steps for constructing the fuzzy control system comprise:
Step 41: Formulating the fuzzy rules and determining the relationship between the input load force and actual steering angle error with the feedforward leakage compensation parameter. The relationship in this specification is *Ψ*(*K_{C}*) *= fuzzy*(*F,e*(*θ*));
Step 42: Determining an expression form of the fuzzy rules, which is:
*Rule : IF"F"is"uᵢ" AND"e*(*θ*)*"is"uⱼ"THEN"*Ψ *"is "* ${u}_{ij}^{{K}_{C}}$*",*
The specific rules are as follows:
   The feedforward leakage compensation parameter generally follows the same trend as the load force. The larger the load force, the larger the feedforward leakage compensation parameter becomes simultaneously.

When the actual steering angle error is positive, the feedforward leakage compensation parameter should increase as the absolute value of the angle error increases; when the actual steering angle error is negative, the feedforward leakage compensation parameter should decrease as the absolute value of the angle error increases;
The range of load force and angle error covers more than 95% of the possibilities. If values exceed the range (comprising maximum or minimum values), the maximum region of the corresponding linguistic variable is taken.

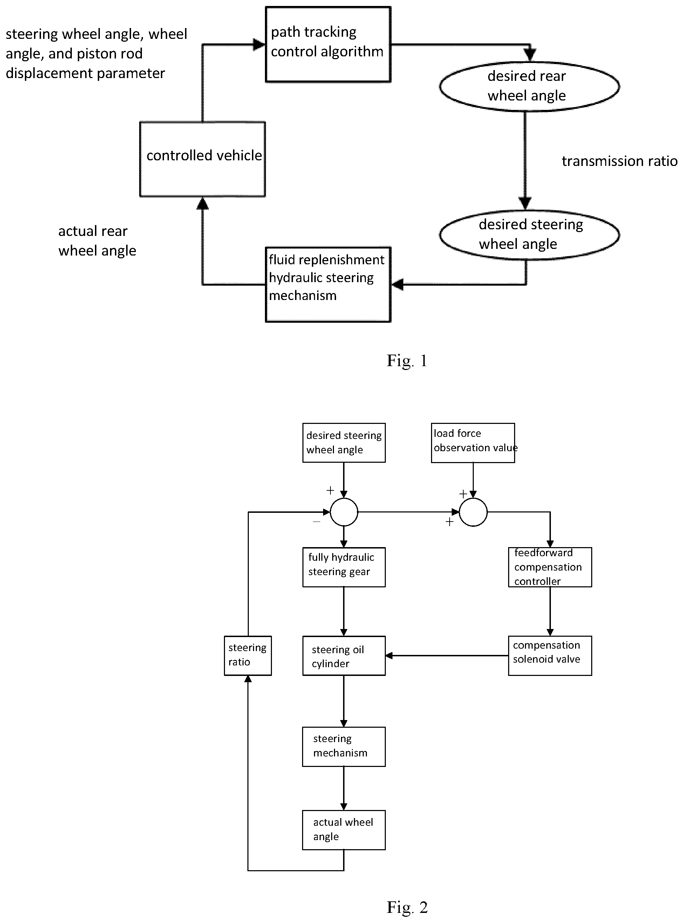

The input and output fuzzy subsets are divided into regions comprises a negative large region, a negative medium region, a negative small region, a zero region, a positive small region, a positive medium region, and a positive large region; thus, the fuzzy control has more range options and is more precise. The membership functions of the input and output systems are established, as shown in Fig. 4;
Step 5: Defuzzifying the fuzzy control system using the centroid method to obtain a fuzzy sliding mode controller, controlling the compensation solenoid valve to perform fluid replenishment, ensuring that the actual steering angle error of the steering system during the path tracking cycle remains within a reasonable range. The specific compensation principle is shown in Fig. 2: During path tracking, when performing steering leakage compensation control, the wheel angle collected by the wheel angle sensor is first converted using a fixed steering ratio and calculated with the steering wheel angle to obtain the actual steering angle error. The actual steering angle error and the load force observation value are then written into the fuzzy sliding mode controller, which calculates the feedforward leakage compensation parameter. If the feedforward leakage compensation parameter is zero, the compensation solenoid valve is closed; if the feedforward leakage compensation parameter is not zero, the compensation solenoid valve is opened, and the duty cycle of the compensation solenoid valve is adjusted to achieve feedforward compensation for the leakage fluid during path tracking, improving the accuracy of path tracking. The steering cylinder outputs a corresponding hydraulic fluid for the steering mechanism to operate.

The expression of the fuzzy sliding mode controller is: $Ψ \left({K}_{C}\right) = \frac{{\sum }_{i = 1}^{n} {\sum }_{j = 1}^{m} {f}_{ij} \left(F,e\left(θ\right)\right) ⋅ {u}_{ij}^{{K}_{C}}}{{\sum }_{i = 1}^{n} {\sum }_{j = 1}^{m} {f}_{ij} \left(F,e\left(θ\right)\right)}$*,* where the value of ${u}_{ij}^{{K}_{C}}$ is determined by the aforementioned fuzzy rules.

Step 6: Compensating for hydraulic steering system leakage during the path tracking cycle by replenishing oil through the compensation solenoid valve; Information such as the vehicle's kinematics and position parameters after the vehicle's hydraulic steering system performs the path tracking steering operation will then be input into the calculation of the next cycle of the path tracking algorithm to form a closed loop, completing the entire path tracking process. The specific closed-loop tracking process is shown in Figure 1.

### Embodiment 2:

The fuzzy feedforward path tracking control method for hydraulic steering leakage compensation of the present invention is applied to a certain type of 3-ton intelligent forklift. The parameters of the hydraulic steering system of the intelligent forklift are shown in the table below:

**Table: Hydraulic Steering System Parameters**

| Parameter | value |
|---|---|
| Kingpin center distance (*Z*) | 810 mm |
| Arm length (*Rₐ*) | 107 mm |
| Link length (*L*₀) | 95.2 mm |
| Steering cylinder piston rod length (*D*) | 60 mm |
| Trapezoidal base angle supplement (*ϕ*₀) | 58° |
| Steering cylinder external offset distance ( *Eₐ*) | 56.7 mm |
| Hydraulic fluid viscosity (*µ*) | 0.05Pa*s |
| Steering cylinder piston viscous damping coefficient (*Rₚ*) | 5000N*s/m |
| Bulk modulus (*E*) | 7×10⁸Pa |
| Steering gear arc displacement (*q*) | 3×10⁻²Pa |
| Steering cylinder working area (*A_{P}*) | 0.007m² |
| Steering cylinder volume (*Vₜ*) | 4.2×10⁻³ m³ |
| Steering valve spool diameter (*d* ) | 0.022m |
| Steering gear gap height (*h*) | 10µm |
| Flow gain (*k*_{*q*1}) | 0.82 |
| Hydraulic fluid density (*ρ*) | 850kg/m3 |
| Equivalent mass of piston and piston rod (*mₚ*) | 12kg |
| Elastic stiffness coefficient (*k*) | 2.5 × 10⁹ N/m |
| Steering cylinder leakage coefficient (*Cᵥ*) | 4.7×10⁻¹³ m³ /Pa |

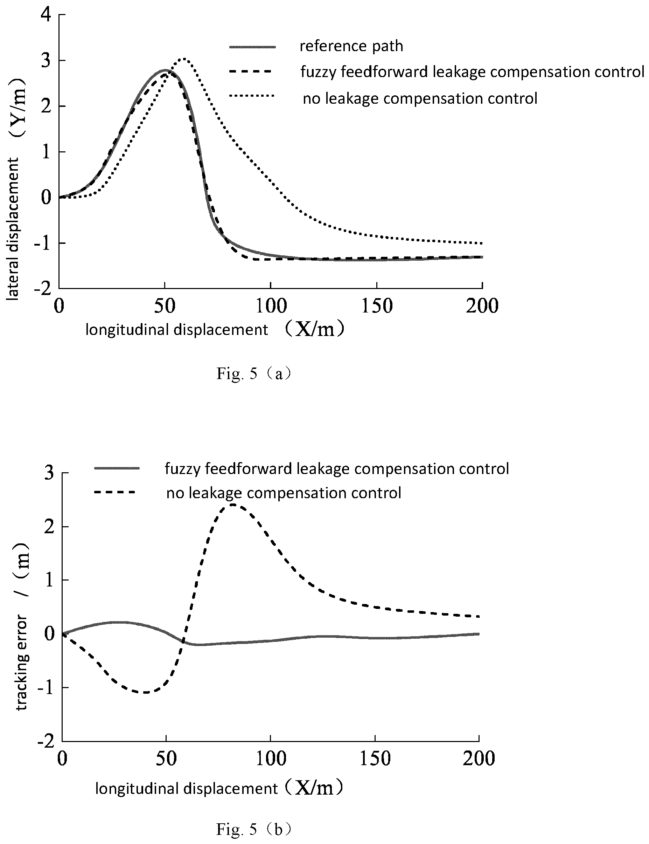

The process of hydraulic fluid leakage compensation during the forklift's path tracking is as follows:
Step 1: Based on the path tracking algorithm in a certain path tracking cycle, calculating a desired wheel angle *β*=22° and subsequently converting it to a desired steering wheel angle parameter *θ*=242° via the transmission ratio *Kᵥ* = 11 of the steering system;
Step 2: Collecting an actual wheel angle *βₐ* = 23°, and obtaining a corresponding steering wheel angle parameter *θₐ* =253° according to the transmission ratio *Kᵥ* =11 of the steering system; collecting an actual steering wheel angle *θ_{b}* = *θ* = 242°, thus obtaining an actual steering angle error *e*(*θ*) *=* 11°;
Step 3: Collecting a real-time load force *F* = 2320*N* by an observer;
Step 4: Calculating a feedforward leakage compensation parameter *K_{C} =* 0.33 at this time through fuzzy control;
Step 5: Constructing a fuzzy control system based on the load force, the actual steering angle error, and the feedforward leakage compensation parameter;
Step 6: Opening the compensation solenoid valve and using the fuzzy sliding mode controller to control its opening based on the actual rear wheel angle, for example, the fuzzy sliding mode controller outputting a 33% duty cycle PWM control signal to the hydraulic fluid compensation solenoid valve for fluid replenishment;
Step 7: Repeating the above steps in each cycle for closed-loop path tracking control. The comparison of path tracking with and without leakage compensation and the tracking error comparison are shown in Figures 5(a) and (b). From the figures, it can be seen that the forklift fuzzy feedforward path tracking control algorithm based on hydraulic steering leakage compensation according to the present invention exhibits excellent tracking performance, with the peak tracking error being less than 0.25m. In contrast, the path tracking performance without full hydraulic steering system leakage compensation is poor. Due to leakage, the wheel angle cannot fully respond to the desired steering wheel angle during steering, resulting in a constant understeer state. As a result, the tracking error cannot be compensated throughout the entire path tracking process, with the peak tracking error reaching 2.385m, significantly deviating from the reference path.

In summary, the forklift fuzzy feedforward path tracking control method based on hydraulic steering leakage compensation according to the present invention can effectively compensate for hydraulic steering system leakage during the path tracking process of intelligent forklifts, improving the path tracking accuracy of intelligent forklifts.

Although the present specification is described in terms of embodiments, it is not intended that each embodiment includes only one independent technical solution. This narrative mode of the specification is merely for the sake of clarity. Those skilled in the art should understand the specification as a whole, and the technical solutions in the various embodiments can also be appropriately combined to form other embodiments that can be understood by those skilled in the art.

Therefore, the above description is only a preferred embodiment of the present application and is not intended to limit the scope of the present application; that is, all equivalent variations made within the scope of the claims of the present application shall fall within the protection scope of the claims of the present application.

## Claims

1. A vehicle fuzzy feedforward path tracking control method based on hydraulic steering leakage compensation, **characterized by** the following steps:
Step 1: acquiring a steering wheel angle, a wheel angle, and a piston rod displacement parameter;
Step 2: determining a transmission ratio *Kᵥ* of a hydraulic steering system of the vehicle, wherein a path tracking algorithm outputs a desired wheel angle *β* in different cycles, obtaining a desired steering wheel angle *θ* = *βKᵥ,* and inputting the desired steering wheel angle into the hydraulic steering system of the vehicle to perform path tracking steering operations; **characterised in that** it includes the following further steps:
Step 3: determining a steering load force *F* and an actual steering angle error *e*(*θ*), and obtaining a feedforward leakage compensation parameter *K_{C}* through fuzzy control; Step 4: using the load force and the actual steering angle error as inputs to fuzzy rules, controlling the feedforward leakage compensation parameter as an output of the fuzzy rules, and constructing a fuzzy control system;
Step 5: defuzzifying the fuzzy control system using the centroid method to obtain a fuzzy sliding mode controller, and using the fuzzy sliding mode controller to perform a comparative analysis of a rear wheel angle, controlling the compensation solenoid valve to perform fluid replenishment, ensuring that the actual steering angle error of the steering system during the path tracking cycle remains within a reasonable range;
Step 6: performing fluid replenishment by the compensation solenoid valve for each path tracking cycle, and executing a path tracking steering operation by the vehicle hydraulic steering system;
Step 7: repeating the above steps 1-6 to perform calculations for a next cycle of the path tracking algorithm, completing an entire path tracking process.

2. The vehicle fuzzy feedforward path tracking control method based on hydraulic steering leakage compensation according to claim 1, **characterized in that** in Step 1, the steering wheel angle parameter is detected by a steering wheel angle sensor installed on a steering column of the forklift; the wheel angle parameter is detected by a wheel angle sensor installed at the rear steered wheel of the forklift; and the piston rod displacement parameter is detected by a displacement sensor installed on the steering piston rod.

3. The vehicle fuzzy feedforward path tracking control method based on hydraulic steering leakage compensation according to claim 1, **characterized in that** in Step 2, the transmission ratio *Kᵥ* of the hydraulic steering system is determined by specific characteristics of the steering system of the vehicle.

4. The vehicle fuzzy feedforward path tracking control method based on hydraulic steering leakage compensation according to claim 1, **characterized in that** in Step 3, the load force *F* is measured by an observer.

5. The vehicle fuzzy feedforward path tracking control method based on hydraulic steering leakage compensation according to claim 1, **characterized in that** the actual steering angle error *e*(*θ*) in Step 3 is a steering deviation value, which is the difference between a corresponding steering wheel angle and an actual steering wheel angle, where the actual steering wheel angle is a steering wheel angle collected by the steering wheel angle sensor, and the corresponding steering wheel angle is obtained by converting the actual wheel angle collected by the wheel angle sensor using the transmission ratio of the hydraulic steering system.

6. The vehicle fuzzy feedforward path tracking control method based on hydraulic steering leakage compensation according to claim 1, **characterized in that** in Step 4, the formulation of the fuzzy rules comprises:
the feedforward leakage compensation parameter generally follows the same trend as the load force; the larger the load force, the larger the feedforward leakage compensation parameter becomes simultaneously;
when the actual steering angle error is positive, the feedforward leakage compensation parameter should increase as the absolute value of the actual steering angle error increases; when the actual steering angle error is negative, the feedforward leakage compensation parameter should decrease as the absolute value of the actual steering angle error increases.

7. The vehicle fuzzy feedforward path tracking control method based on hydraulic steering leakage compensation according to claim 1, **characterized in that** in Step 4, the steps for constructing the fuzzy control system comprise:
Step 41: formulating the fuzzy rules and determining the relationship between the load force, the actual steering angle error, and the feedforward leakage compensation parameter;
Step 42: determining an expression form of the fuzzy rules, dividing input and output fuzzy subsets into regions, and establishing a membership function for input and output systems to obtain the fuzzy control system.

8. The vehicle fuzzy feedforward path tracking control method based on hydraulic steering leakage compensation according to claim 7, **characterized in that** in Step 42, the dividing input and output fuzzy subsets into regions comprises a negative large region, a negative medium region, a negative small region, a zero region, a positive small region, a positive medium region, and a positive large region.

9. The vehicle fuzzy feedforward path tracking control method based on hydraulic steering leakage compensation according to claim 4, **characterized in that** the load force *F* is measured by an observer, which is achieved by tracking and measuring the piston rod displacement, and then real-time predicting the load force by combining a flow equation and a dynamic equation of a steering cylinder in the hydraulic steering system, wherein the flow equation of the steering cylinder of the hydraulic steering gear is: ${Q}_{a} = {A}_{p} \frac{dy}{dt} + \frac{{V}_{t}}{E} \frac{{dP}_{7}}{dt} + {C}_{t} \frac{{dP}_{7}}{dt}$ (1)
the dynamic equation of the steering cylinder of the hydraulic steering gear is: ${p}_{7} {A}_{p} = {m}_{p} \frac{{d}^{2} y}{d {t}^{2}} + {R}_{p} \frac{d y}{d t} + F$ (2)
Where: *P*₇ is a load pressure of the steering cylinder, *Aₚ* is a working cross-sectional area of the steering cylinder, *Vₜ* is a cylinder volume, *mₚ* is an equivalent mass of the piston and piston rod, *E* is a bulk modulus of the hydraulic fluid, *Rₚ* is a viscous damping coefficient of the piston, *F* is the load force, *y* is the actual piston rod displacement; Cₜ is a hydraulic fluid leakage coefficient, and dt is an integral over time,
based on the analysis of equations (1) and (2), a load force observation state variable is selected as: $x = {\left[y \dot{y} {p}_{7} F\right]}^{T}$ (3)
a state equation of a hydraulic steering system model is: $\hat{x} = Ax + Bu$ (4)
where: $A = \left[\begin{matrix}0 & 1 & 0 \\ 0 & {c}_{1} & {c}_{2} \\ 0 & {c}_{3} & {c}_{4}\end{matrix}\right] , B = \left[\begin{matrix}0 \\ 0 \\ {c}_{5}\end{matrix}\right] ,$ ${c}_{1} = - \frac{{R}_{p}}{{m}_{p}} , {c}_{2} = \frac{{A}_{p}}{{m}_{p}} , {c}_{3} = - \frac{E {A}_{p}}{{V}_{t}} , {c}_{4} = - \frac{E}{{V}_{t}} \left({k}_{c 1}+2{C}_{t}\right) , {c}_{5} = \frac{E}{{V}_{t}} {k}_{q 1}$
*k*_{ql} is a flow gain, *k*_{c1} is a system flow-pressure coefficient, Cₜ is a hydraulic fluid leakage coefficient, and *u* is a system input steering wheel angle;
an observer state equation used is as follows: $\dot{\hat{x}} = A \hat{x} + Bu + He$ (5)
Where: *e* is an error between the system's true state variable and the observer's estimated state, *H* is an coefficient of the observer, also known as an observation matrix, *H=*[*H*₁ *H*₂ *H*₃ *H*₄]*^{T}*;
assuming desired pole positions of a load force observation system are *p*₁,*p*₂,*p₃,p₄,* values of parameters *H*₁,*H*₂,*H*₃,*H*₄ should satisfy: $\left|sI-A\right| = {\sum }_{i = 1}^{n + 1} \left(s-{p}_{i}\right)$ (6) $\left(s-{p}_{1}\right) \left(s-{p}_{2}\right) \left(s-{p}_{3}\right) \left(s-{p}_{4}\right) = 0$ (7)
by equating the coefficients of each term of the polynomial for *s,* values of the parameters are determined: $\begin{matrix}{H}_{1} = {c}_{1} - {p}_{1} - {p}_{2} - {p}_{3} - {p}_{4} + {c}_{4} \\ {H}_{2} = {H}_{1} ⋅ {c}_{1} + {H}_{1} ⋅ {c}_{4} + {p}_{1} ⋅ {p}_{2} + {c}_{2} ⋅ {c}_{3} + {p}_{4} ⋅ \left({p}_{1}+{p}_{2}+{p}_{3}\right) + {p}_{3} ⋅ \left({p}_{1}+{p}_{2}\right) \\ {H}_{3} = \left\{{H}_{2}⋅{c}_{4}-{H}_{4}⋅{c}_{3}-{p}_{4}⋅\left[{p}_{1}⋅{p}_{2}+{p}_{3}⋅\left({p}_{1}+{p}_{2}\right)\right]+{H}_{1}⋅{c}_{2}⋅{c}_{3}-{p}_{1}⋅{p}_{2}⋅{p}_{3}\right\} / {c}_{2} \\ {H}_{4} = - {p}_{1} ⋅ {p}_{2} ⋅ {p}_{3} ⋅ {p}_{4} / \left({c}_{3}⋅{c}_{4}\right)\end{matrix}$ (8).

## Patentansprüche

1. Verfahren zur Fuzzy-Vorsteuerungs-Pfadfolgeregelung für ein Fahrzeug auf Basis der Leckagekompensation von hydraulischer Lenkung, **gekennzeichnet durch** die folgenden Schritte:
Schritt 1: Erfassen eines Lenkradwinkels, eines Radwinkels und eines Kolbenstangen-Verschiebungsparameters;
Schritt 2: Bestimmen eines Übersetzungsverhältnisses *Kᵥ* eines hydraulischen Lenksystems des Fahrzeugs, wobei ein Pfadfolgealgorithmus in verschiedenen Zyklen einen Soll-Radwinkel *β* ausgibt, Erhalten eines Soll-Lenkradwinkels *θ = βKᵥ,* und Eingeben des Soll-Lenkradwinkels in das hydraulische Lenksystem des Fahrzeugs, um Pfadfolge-Lenkvorgänge durchzuführen; **dadurch gekennzeichnet, dass** es die folgenden weiteren Schritte umfasst:
Schritt 3: Bestimmen einer Lenklastkraft *F* und eines tatsächlichen Lenkwinkelfehlers *e*(*θ*), und Erhalten eines Vorsteuerungs-Leckagekompensationsparameters *K_{C}* durch Fuzzy-Regelung;
Schritt 4: Verwenden der Lastkraft und des tatsächlichen Lenkwinkelfehlers als Eingänge für Fuzzy-Regeln, Steuern des Vorsteuerungs-Leckagekompensationsparameters als Ausgang der Fuzzy-Regeln und Aufbauen eines Fuzzy-Regelsystems;
Schritt 5: Defuzzifizieren des Fuzzy-Regelsystems unter Verwendung der Schwerpunktmethode, um einen Fuzzy-Gleitmodusregler zu erhalten, und Verwenden des Fuzzy-Gleitmodusreglers zur Durchführung einer vergleichenden Analyse eines Hinterradwinkels, Steuern des Kompensationsmagnetventils zur Durchführung einer Fluidbefüllung, und Sicherstellen, dass der tatsächliche Lenkwinkelfehler des Lenksystems während des Pfadfolgezyklus innerhalb eines angemessenen Bereichs bleibt;
Schritt 6: Durchführen einer Fluidbefüllung durch das Kompensationsmagnetventil für jeden Pfadfolgezyklus, und Ausführen eines Pfadfolge-Lenkvorgangs durch das hydraulische Lenksystem des Fahrzeugs;
Schritt 7: Wiederholen der obigen Schritte 1-6 zur Durchführung von Berechnungen für einen nächsten Zyklus des Pfadfolgealgorithmus, und Abschließen eines gesamten Pfadfolgeprozesses.

2. Verfahren zur Fuzzy-Vorsteuerungs-Pfadfolgeregelung für ein Fahrzeug auf Basis der Leckagekompensation von hydraulischer Lenkung nach Anspruch 1, **dadurch gekennzeichnet, dass** in Schritt 1 der Parameter des Lenkradwinkels durch einen an einer Lenksäule des Gabelstaplers angebrachten Lenkradwinkelsensor erfasst wird; der Parameter des Radwinkels durch einen an dem hinteren gelenkten Rad des Gabelstaplers angebrachten Radwinkelsensor erfasst wird; und der Kolbenstangen-Verschiebungsparameter durch einen an der Lenkkolbenstange angebrachten Verschiebungssensor erfasst wird.

3. Verfahren zur Fuzzy-Vorsteuerungs-Pfadfolgeregelung für ein Fahrzeug auf Basis der Leckagekompensation von hydraulischer Lenkung nach Anspruch 1, **dadurch gekennzeichnet, dass** in Schritt 2 das Übersetzungsverhältnis *Kᵥ* des hydraulischen Lenksystems durch spezifische Eigenschaften des Lenksystems des Fahrzeugs bestimmt wird.

4. Verfahren zur Fuzzy-Vorsteuerungs-Pfadfolgeregelung für ein Fahrzeug auf Basis der Leckagekompensation von hydraulischer Lenkung nach Anspruch 1, **dadurch gekennzeichnet, dass** in Schritt 3 die Lastkraft *F* durch einen Beobachter gemessen wird.

5. Verfahren zur Fuzzy-Vorsteuerungs-Pfadfolgeregelung für ein Fahrzeug auf Basis der Leckagekompensation von hydraulischer Lenkung nach Anspruch 1, **dadurch gekennzeichnet, dass** der tatsächliche Lenkwinkelfehler *e*(*θ*) in Schritt 3 ein Lenkabweichungswert ist, der die Differenz zwischen einem entsprechenden Lenkradwinkel und einem tatsächlichen Lenkradwinkel ist, wobei der tatsächliche Lenkradwinkel ein von dem Lenkradwinkelsensor erfasster Lenkradwinkel ist, und der entsprechende Lenkradwinkel durch Umrechnen des von dem Radwinkelsensor erfassten tatsächlichen Radwinkels unter Verwendung des Übersetzungsverhältnisses des hydraulischen Lenksystems erhalten wird.

6. Verfahren zur Fuzzy-Vorsteuerungs-Pfadfolgeregelung für ein Fahrzeug auf Basis der Leckagekompensation von hydraulischer Lenkung nach Anspruch 1, **dadurch gekennzeichnet, dass** in Schritt 4 die Formulierung der Fuzzy-Regeln umfasst:
dass der Vorsteuerungs-Leckagekompensationsparameter im Wesentlichen dem gleichen Trend wie die Lastkraft folgt; wobei je größer die Lastkraft ist, desto größer gleichzeitig der Vorsteuerungs-Leckagekompensationsparameter wird;
dass wenn der tatsächliche Lenkwinkelfehler positiv ist, der Vorsteuerungs-Leckagekompensationsparameter mit zunehmendem Absolutwert des tatsächlichen Lenkwinkelfehlers ansteigen sollte; und wenn der tatsächliche Lenkwinkelfehler negativ ist, der Vorsteuerungs-Leckagekompensationsparameter mit zunehmendem Absolutwert des tatsächlichen Lenkwinkelfehlers abnehmen sollte.

7. Verfahren zur Fuzzy-Vorsteuerungs-Pfadfolgeregelung für ein Fahrzeug auf Basis der Leckagekompensation von hydraulischer Lenkung nach Anspruch 1, **dadurch gekennzeichnet, dass** in Schritt 4 die Schritte zum Aufbau des Fuzzy-Regelsystems umfassen:
Schritt 41: Formulieren der Fuzzy-Regeln und Bestimmen der Beziehung zwischen der Lastkraft, dem tatsächlichen Lenkwinkelfehler und dem Vorsteuerungs-Leckagekompensationsparameter;
Schritt 42: Bestimmen einer Ausdrucksform der Fuzzy-Regeln, Unterteilen von Eingangs- und Ausgangs-Fuzzy-Teilmengen in Bereiche, und Einrichten einer Zugehörigkeitsfunktion für Eingangs- und Ausgangssysteme, um das Fuzzy-Regelsystem zu erhalten.

8. Verfahren zur Fuzzy-Vorsteuerungs-Pfadfolgeregelung für ein Fahrzeug auf Basis der Leckagekompensation von hydraulischer Lenkung nach Anspruch 7, **dadurch gekennzeichnet, dass** in Schritt 42 das Unterteilen von Eingangs- und Ausgangs-Fuzzy-Teilmengen in Bereiche einen negativ großen Bereich, einen negativ mittleren Bereich, einen negativ kleinen Bereich, einen Nullbereich, einen positiv kleinen Bereich, einen positiv mittleren Bereich und einen positiv großen Bereich umfasst.

9. Verfahren zur Fuzzy-Vorsteuerungs-Pfadfolgeregelung für ein Fahrzeug auf Basis der Leckagekompensation von hydraulischer Lenkung nach Anspruch 4, **dadurch gekennzeichnet, dass** die Lastkraft F durch einen Beobachter gemessen wird, was dadurch erreicht wird, dass die Kolbenstangen-Verschiebung verfolgt und gemessen wird und dann die Lastkraft in Echtzeit durch Kombinieren einer Strömungsgleichung und einer dynamischen Gleichung eines Lenkzylinders in dem hydraulischen Lenksystem vorhergesagt wird, wobei die Strömungsgleichung des Lenkzylinders des hydraulischen Lenkgetriebes lautet: ${Q}_{a} = {A}_{p} \frac{dy}{dt} + \frac{{V}_{t}}{E} \frac{{dP}_{7}}{dt} + {C}_{t} \frac{{dP}_{7}}{dt}$ (1)
die dynamische Gleichung des Lenkzylinders des hydraulischen Lenkgetriebes lautet: ${p}_{7} {A}_{p} = {m}_{p} \frac{{d}^{2} y}{d {t}^{2}} + {R}_{p} \frac{d y}{d t} + F$ (2)
wobei: *P₇* ein Lastdruck des Lenkzylinders ist, *Aₚ* eine wirksame Querschnittsfläche des Lenkzylinders ist, *Vₜ* ein Zylindervolumen ist, *mₚ* eine äquivalente Masse des Kolbens und der Kolbenstange ist, *E* ein Volumenelastizitätsmodul der Hydraulikflüssigkeit ist, *Rₚ* ein viskoser Dämpfungskoeffizient des Kolbens ist, *F* die Lastkraft ist, *y* die tatsächliche Kolbenstangen-Verschiebung ist; *Cₜ* ein Hydraulikflüssigkeits-Leckagekoeffizient ist und *dt* ein Zeitintegral ist,
wobei basierend auf der Analyse der Gleichungen (1) und (2) eine Lastkraftbeobachtungs-Zustandsgröße wie folgt ausgewählt wird: $x = {\left[y \dot{y} {p}_{7} F\right]}^{T}$ (3)
wobei eine Zustandsgleichung eines hydraulischen Lenksystemmodells lautet: $\dot{x} = Ax + Bu$ (4)
wobei: $A = \left[\begin{matrix}0 & 1 & 0 \\ 0 & {c}_{1} & {c}_{2} \\ 0 & {c}_{3} & {c}_{4}\end{matrix}\right] , B = \left[\begin{matrix}0 \\ 0 \\ {c}_{5}\end{matrix}\right] ,$ ${c}_{1} = - \frac{{R}_{p}}{{m}_{p}} , {c}_{2} = \frac{{A}_{p}}{{m}_{p}} , {c}_{3} = - \frac{{EA}_{p}}{{V}_{t}} , {c}_{4} = - \frac{E}{{V}_{t}} \left({k}_{c 1}+2{C}_{t}\right) , {c}_{5} = \frac{E}{{V}_{t}} {k}_{q 1}$
wobei *k_{ql}* ein Strömungsverstärkungsfaktor ist, *k_{cl}* ein Systemströmungs-Druckkoeffizient ist, *Cₜ* ein Hydraulikflüssigkeits-Leckagekoeffizient ist, und *u* ein Systemeingangs-Lenkradwinkel ist;
wobei eine verwendete Beobachterzustandsgleichung lautet: $\dot{\hat{x}} = A \hat{x} + Bu + He$ (5)
wobei: *e* ein Fehler zwischen der wahren Zustandsgröße des Systems und der geschätzten Zustand des Beobachters ist, *H* ein Koeffizient des Beobachters ist, auch bekannt als eine Beobachtungsmatrix, *H =* [*H*₁ *H*₂ *H*₃ *H*₄]*^{T}*;
wobei unter der Annahme, dass gewünschte Polstellen eines Lastkraftbeobachtungssystems *p*₁,*p*₂,*p*₃,*p*₄ sind, Werte von Parametern *H*₁,*H*₂,*H*₃,*H*₄ Folgendes erfüllen sollten: $\left|sI-A\right| = {\sum }_{i = 1}^{n + 1} \left(s-{p}_{i}\right)$ (6) $\left(s-{p}_{1}\right) \left(s-{p}_{2}\right) \left(s-{p}_{3}\right) \left(s-{p}_{4}\right) = 0$ (7)
wobei durch Gleichsetzen der Koeffizienten jedes Terms des Polynoms für *s* die Werte der Parameter bestimmt werden: $\begin{matrix}{H}_{1} = {c}_{1} - {p}_{1} - {p}_{2} - {p}_{3} - {p}_{4} + {c}_{4} \\ {H}_{2} = {H}_{1} ⋅ {c}_{1} + {H}_{1} ⋅ {c}_{4} + {p}_{1} ⋅ {p}_{2} + {c}_{2} ⋅ {c}_{3} + {p}_{4} ⋅ \left({p}_{1}+{p}_{2}+{p}_{3}\right) + {p}_{3} ⋅ \left({p}_{1}+{p}_{2}\right) \\ {H}_{3} = \left\{{H}_{2}⋅{c}_{4}-{H}_{4}⋅{c}_{3}-{p}_{4}⋅\left[{p}_{1}⋅{p}_{2}+{p}_{3}⋅\left({p}_{1}+{p}_{2}\right)\right]+{H}_{1}⋅{c}_{2}⋅{c}_{3}-{p}_{1}⋅{p}_{2}⋅{p}_{3}\right\} / {c}_{2} \\ {H}_{4} = - {p}_{1} ⋅ {p}_{2} ⋅ {p}_{3} ⋅ {p}_{4} / \left({c}_{3}⋅{c}_{4}\right)\end{matrix}$ (8).

## Revendications

1. Un procédé de commande de suivi de trajectoire floue anticipative pour véhicule basé sur une compensation de fuite de direction hydraulique, **caractérisé par** les étapes suivantes :
Étape 1 : acquérir un angle de volant, un angle de roue et un paramètre de déplacement de tige de piston ;
Étape 2 : déterminer un rapport de transmission *K*ᵥ d'un système de direction hydraulique du vé hicule, dans lequel un algorithme de suivi de trajectoire fournit un angle de roue souhaité *β* dans différents cycles, obtenir un angle de volant souhaité θ = βKᵥ, et introduire l'angle de volant souhaité dans le système de direction hydraulique du véhicule pour effectuer des opérations de direction de suivi de trajectoire ; **caractérisé en ce qu'**il comprend les étapes supplémentaires suivantes :
Étape 3 : déterminer une force de charge de direction *F* et une erreur d'angle de direction réelle *e*(*θ*)*,* et obtenir un paramètre de compensation de fuite anticipatif *K_{C}* par commande floue ;
Étape 4 : utiliser la force de charge et l'erreur d'angle de direction réelle comme entrées des règles floues, commander le paramètre de compensation de fuite anticipatif comme sortie des règles floues, et construire un système de commande floue ;
Étape 5 : défuzzifier le système de commande floue en utilisant la méthode du centroïde pour obtenir un contrôleur à mode glissant flou, et utiliser le contrôleur à mode glissant flou pour effectuer une analyse comparative d'un angle de roue arrière, commander la vanne solénoïde de compensation pour effectuer un appoint de fluide, garantissant que l'erreur d'angle de direction ré elle du système de direction pendant le cycle de suivi de trajectoire reste dans une plage raisonnable ;
Étape 6 : effectuer un appoint de fluide par la vanne solénoïde de compensation pour chaque cycle de suivi de trajectoire, et exécuter une opération de direction de suivi de trajectoire par le système de direction hydraulique du véhicule ;
Étape 7 : répéter les étapes 1 à 6 ci-dessus pour effectuer des calculs pour un cycle suivant de l'algorithme de suivi de trajectoire, complétant ainsi l'ensemble du processus de suivi de trajectoire.

2. Le procédé de commande de suivi de trajectoire floue anticipative pour véhicule basé sur une compensation de fuite de direction hydraulique selon la revendication 1, **caractérisé en ce que** dans l'étape 1, le paramètre d'angle de volant est détecté par un capteur d'angle de volant installé sur une colonne de direction du chariot élévateur ; le paramètre d'angle de roue est détecté par un capteur d'angle de roue installé au niveau de la roue directrice arrière du chariot élévateur ; et le paramètre de déplacement de tige de piston est détecté par un capteur de déplacement installé sur la tige de piston de direction.

3. Le procédé de commande de suivi de trajectoire floue anticipative pour véhicule basé sur une compensation de fuite de direction hydraulique selon la revendication 1, **caractérisé en ce que** dans l'étape 2, le rapport de transmission *Kᵥ* du système de direction hydraulique est déterminé par les caractéristiques spécifiques du système de direction du véhicule.

4. Le procédé de commande de suivi de trajectoire floue anticipative pour véhicule basé sur une compensation de fuite de direction hydraulique selon la revendication 1, **caractérisé en ce que** dans l'étape 3, la force de charge *F* est mesurée par un observateur.

5. Le procédé de commande de suivi de trajectoire floue anticipative pour véhicule basé sur une compensation de fuite de direction hydraulique selon la revendication 1, **caractérisé en ce que** l'erreur d'angle de direction réelle *e*(*θ*) dans l'étape 3 est une valeur de déviation de direction, qui est la différence entre un angle de volant correspondant et un angle de volant réel, où l'angle de volant réel est un angle de volant collecté par le capteur d'angle de volant, et l'angle de volant correspondant est obtenu en convertissant l'angle de roue réel collecté par le capteur d'angle de roue en utilisant le rapport de transmission du système de direction hydraulique.

6. Le procédé de commande de suivi de trajectoire floue anticipative pour véhicule basé sur une compensation de fuite de direction hydraulique selon la revendication 1, **caractérisé en ce que** dans l'étape 4, la formulation des règles floues comprend :
le paramètre de compensation de fuite anticipatif suit généralement la même tendance que la force de charge ; plus la force de charge est grande, plus le paramètre de compensation de fuite anticipatif devient grand simultanément ;
lorsque l'erreur d'angle de direction réelle est positive, le paramètre de compensation de fuite anticipatif doit augmenter avec la valeur absolue de l'erreur d'angle de direction réelle ; lorsque l'erreur d'angle de direction réelle est négative, le paramètre de compensation de fuite anticipatif doit diminuer avec la valeur absolue de l'erreur d'angle de direction réelle.

7. Le procédé de commande de suivi de trajectoire floue anticipative pour véhicule basé sur une compensation de fuite de direction hydraulique selon la revendication 1, **caractérisé en ce que** dans l'étape 4, les étapes de construction du système de commande floue comprennent :
Étape 41 : formuler les règles floues et déterminer la relation entre la force de charge, l'erreur d'angle de direction réelle et le paramètre de compensation de fuite anticipatif ;
Étape 42 : déterminer une forme d'expression des règles floues, diviser les sous-ensembles flous d'entrée et de sortie en régions, et établir une fonction d'appartenance pour les systèmes d'entrée et de sortie pour obtenir le système de commande floue.

8. Le procédé de commande de suivi de trajectoire floue anticipative pour véhicule basé sur une compensation de fuite de direction hydraulique selon la revendication 7, **caractérisé en ce que** dans l'étape 42, la division des sous-ensembles flous d'entrée et de sortie en régions comprend une ré gion négative grande, une région négative moyenne, une région négative petite, une région nulle, une région positive petite, une région positive moyenne et une région positive grande.

9. Le procédé de commande de suivi de trajectoire floue anticipative pour véhicule basé sur une compensation de fuite de direction hydraulique selon la revendication 4, **caractérisé en ce que** la force de charge *F* est mesurée par un observateur, qui est réalisé en suivant et en mesurant le d éplacement de la tige de piston, puis en prédisant en temps réel la force de charge en combinant une équation de débit et une équation dynamique d'un vérin de direction dans le système de direction hydraulique, dans lequel l'équation de débit du vérin de direction du boîtier de direction hydraulique est : ${Q}_{a} = {A}_{p} \frac{dy}{dt} + \frac{{V}_{t}}{E} \frac{{dP}_{7}}{dt} + {C}_{t} \frac{{dP}_{7}}{dt}$ (1)
l'équation dynamique du vérin de direction du boîtier de direction hydraulique est : ${p}_{7} {A}_{p} = {m}_{p} \frac{{d}^{2} y}{d {t}^{2}} + {R}_{p} \frac{d y}{d t} + F$ (2)
Où : *P*₇ est une pression de charge du vérin de direction, *Aₚ* est une section transversale de travail du vérin de direction, *Vₜ* est un volume de vérin, *mₚ* est une masse équivalente du piston et de la tige de piston, *E* est un module de compressibilité du fluide hydraulique, *Rₚ* est un coefficient d'amortissement visqueux du piston, *F* est la force de charge, *y* est le dé placement réel de la tige de piston ; *Cₜ* est un coefficient de fuite de fluide hydraulique, et *dt* est une intégrale dans le temps,
sur la base de l'analyse des équations (1) et (2), une variable d'état d'observation de force de charge est sélectionnée comme : $x = {\left[y \dot{y} {p}_{7} F\right]}^{T}$ (3)
une équation d'état d'un modèle de système de direction hydraulique est : $\dot{x} = Ax + Bu$ (4)
where: $A = \left[\begin{matrix}0 & 1 & 0 \\ 0 & {c}_{1} & {c}_{2} \\ 0 & {c}_{3} & {c}_{4}\end{matrix}\right] , B = \left[\begin{matrix}0 \\ 0 \\ {c}_{5}\end{matrix}\right] ,$ ${c}_{1} = - \frac{{R}_{p}}{{m}_{p}} , {c}_{2} = \frac{{A}_{p}}{{m}_{p}} , {c}_{3} = - \frac{{EA}_{p}}{{V}_{t}} , {c}_{4} = - \frac{E}{{V}_{t}} \left({k}_{c 1}+2{C}_{t}\right) , {c}_{5} = \frac{E}{{V}_{t}} {k}_{q 1}$
*k*_{ql} est un gain de débit, *k*_{cl} est un coefficient de débit-pression du système, *Cₜ* est un coefficient de fuite de fluide hydraulique, et *u* est un angle de volant d'entrée du syst ème ;
une équation d'état d'observateur utilisée est la suivante : $\dot{\hat{x}} = A \hat{x} + Bu + He$ (5)
Où : *e* est une erreur entre la variable d'état réelle du système et l'état estimé par l'observateur, *H* est un coefficient de l'observateur, é galement appel é matrice d'observation, *H =* [*H*₁ *H*₂ *H*₃ *H*₄]*^{T}*;
en supposant que les positions de pôles souhaitées d'un système d'observation de force de charge sont *p*₁,*p*₂,*p₃,p*₄ *,* les valeurs des param è tres *H*₁,*H*₂,*H*₃,*H₄* doivent satisfaire : $\left|sI-A\right| = {\sum }_{i = 1}^{n + 1} \left(s-{p}_{i}\right)$ (6) $\left(s-{p}_{1}\right) \left(s-{p}_{2}\right) \left(s-{p}_{3}\right) \left(s-{p}_{4}\right) = 0$ (7)
en é galisant les coefficients de chaque terme du polynôme pour *s*, les valeurs des paramètres sont déterminées : $\begin{matrix}{H}_{1} = {c}_{1} - {p}_{1} - {p}_{2} - {p}_{3} - {p}_{4} + {c}_{4} \\ {H}_{2} = {H}_{1} ⋅ {c}_{1} + {H}_{1} ⋅ {c}_{4} + {p}_{1} ⋅ {p}_{2} + {c}_{2} ⋅ {c}_{3} + {p}_{4} ⋅ \left({p}_{1}+{p}_{2}+{p}_{3}\right) + {p}_{3} ⋅ \left({p}_{1}+{p}_{2}\right) \\ {H}_{3} = \left\{{H}_{2}⋅{c}_{4}-{H}_{4}⋅{c}_{3}-{p}_{4}⋅\left[{p}_{1}⋅{p}_{2}+{p}_{3}⋅\left({p}_{1}+{p}_{2}\right)\right]+{H}_{1}⋅{c}_{2}⋅{c}_{3}-{p}_{1}⋅{p}_{2}⋅{p}_{3}\right\} / {c}_{2} \\ {H}_{4} = - {p}_{1} ⋅ {p}_{2} ⋅ {p}_{3} ⋅ {p}_{4} / \left({c}_{3}⋅{c}_{4}\right)\end{matrix}$ (8).
